Europäisches Patentamt

European Patent Office

Office européen des brevets

(11) Veröffentlichungsnummer : **0 029 883**
**B1**

## (12) EUROPÄISCHE PATENTSCHRIFT

(45) Veröffentlichungstag der Patentschrift :
**11.04.84**

(51) Int. Cl.³ : **B 60 N   1/00**

(21) Anmeldenummer : **80105545.0**

(22) Anmeldetag : **16.09.80**

(54) **Hydropneumatisch abgefederter Sitz für Fahrzeuge, insbesondere Kraftfahrzeuge.**

(30) Priorität : **30.11.79 DE 2948215**

(43) Veröffentlichungstag der Anmeldung :
**10.06.81 Patentblatt 81/23**

(45) Bekanntmachung des Hinweises auf die Patenterteilung : **11.04.84 Patentblatt 84/15**

(84) Benannte Vertragsstaaten :
**FR GB IT**

(56) Entgegenhaltungen :
**DE-A- 2 738 455**
**DE-B- 1 177 951**
**DE-B- 1 655 548**

(73) Patentinhaber : **Dr.Ing.h.c.  F.  Porsche Aktiengesellschaft**
**Porschestrasse 42**
**D-7000 Stuttgart 40 (DE)**

(72) Erfinder : **Georgi, Reinhard, Dipl.-Ing.**
**Schillerstrasse 32**
**D-7257 Ditzingen (DE)**

Jouve, 18, rue St-Denis, 75001 Paris, France

Hydropneumatisch abgefederter Sitz für Fahrzeuge, insbesondere Kraftfahrzeuge

Die Erfindung betrifft einen hydropneumatisch abgefederten Sitz für Fahrzeuge, insbesondere Kraftfahrzeuge, der sich an einem hydraulischen Verdrängerelement abstützt, wobei das Verdrängerelement unter Zwischenschaltunf einer Leitung an ein einen Hydraulikraum und einen Gasraum aufweisendes Federungssystem angeschlossen ist, wobei in der Leitung ein Dämpfungsglied angeordnet ist.

Bei einem bekannten Sitz der eingangs genannten Gattung (DE-B-16 55 548) ist die Dämpfung auch bei sich ändernder Fahrgeschwindigkeit und Fahrbahnoberfläche konstant. Dadurch kann bei bestimmten Geschwindigkeits- und Fahrbahnzuständen, z. B. zügiger Fahrt und ebener Fahrbahn oder langsamer Fahrt und unebener Fahrbahn, die Dämpfercharakteristik für den Fahrer unangenehm bzw. komfortbeeinträchtigend sein.

Aufgabe der Erfindung ist es daher, an einem hydropneumatisch abgefederten Fahrzeugsitz solche Vorkehrungen zu treffen, daß sich ändernde Fahrgeschwindigkeiten und Fahrbahnoberflächen bei der hydraulischen Dämpfung berücksichtigt werden. Nach der Erfindung wird diese Aufgabe dadurch gelöst, daß das Dämpfungsglied in Abhängigkeit von der Fahrgeschwindigkeit und von der Effektivbeschleunigung von ungefederten Fahrzeugmassen verstellt wird. Hierzu ist es von Vorteil, wenn zur Verstellung des Gliedes Signale eines Tachometers und eines vorzugsweise einem Radführungsglied zugeordneten Beschleunigungsaufnehmers dienen, wobei diese Signale einer Rechnereinheit zugeführt werden, deren Ausgangssignale ein dem Glied zugeordnetes Betätigungssystem beeinflussen. Außerdem wird das Betätigungssystem durch einen Elektromotor und eine Exzenterscheibe gebildet, die auf das den Querschnitt der Leitung ändernde Glied einwirkt.

Die mit der Erfindung hauptsächlich erzielten Vorteile sind darin zu sehen, daß die Charakteristik der Dämpfung in Abhängigkeit der Fahrgeschwingkeit und der Fahrbahnoberfläche verstellt wird, was zur Komfortehöhung eines Kraftfahrzeuges beiträgt.

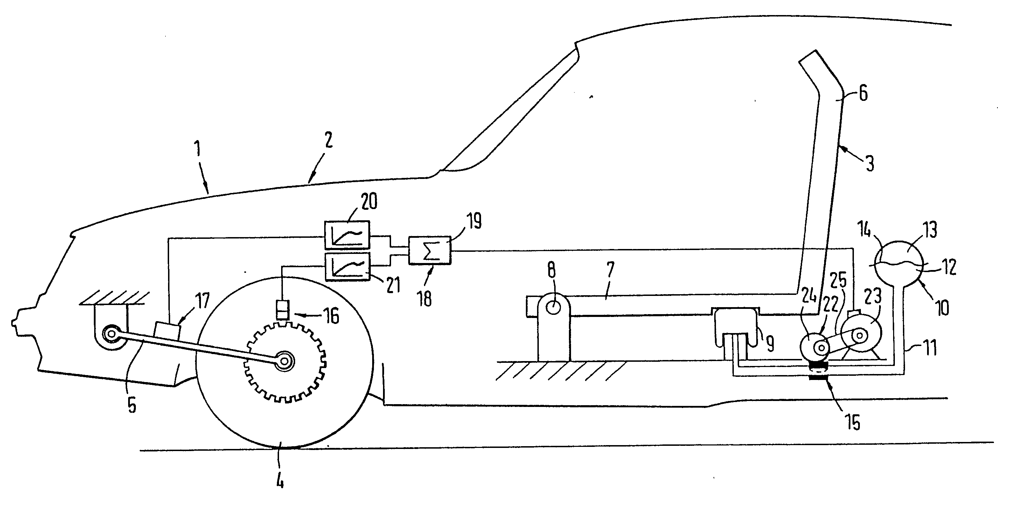

In der Zeichnung, die eine Teilseitenansicht eines Kraftfahrzeuges wiedergibt, ist ein Ausführungsbeispiel der Erfindung dargestellt, das nachstehend beschrieben wird.

Das Kraftfahrzeug 1 weist einen Aufbau 2 und einen Sitz 3 auf. Mit 4 ist ein Rad bezeichnet, das unter Vermittlung eines Radführungsgliedes 5 am Kraftfahrzeug 1 gehalten ist.

Der Sitz 3, bestehend aus Lehnenteil 6 und Sitzteil 7, ist im vorderen Bereich um eine horizontal angeordnete und quer zur Fahrzeuglängsrichtung verlaufende Achse 8 schwenkbar gelagert. Der Sitz 3 kann aber auch mittels eines Parallelogramms am Aufbau befestigt sein. Im hinteren Bereich stützt sich der Sitz 3 auf einem hydraulischen Verdrängerelement 9 eines hydropneumatischen Federungssystem 10 ab. Das Federungssystem 10, das über eine Leitung 11 mit dem Verdrängerelement 9 verbunden ist, weist einen Hydraulikraum 12 und einen Gasraum 13 auf, die durch eine Membran getrennt sind.

In die Leitung 11 zwischen dem Verdrängerelement 9 und dem Federungssystem 10 ist ein Glied 15 geschaltet, mit dem durch Verkleinerung oder Vergrößerung des Querschnitts der Leitung 11 die Dämpfung des hydraulischen Systems verstellt werden kann.

Diese Verstellung erfolgt in Abhängigkeit der Fahrgeschwindigkeit und der Effektivbeschleunigung von ungefederten Fahrzeugmassen. Die Fahrgeschwindigkeit wird über einen vorhandenen elektronischen Tachometer 16 abgenommen. Zur Aufnahme der Effektivbeschleunigung von ungefederten Fahrzeugmassen ist am Radführungsglied 5 ein Beschleunigungsaufnehmer 17 angebracht.

Die Signale des Tachometers 16 und des Beschleunigungsaufnehmers 17 werden einer Rechnereinheit 18, bestehend aus Rechnern 19, 20, 21 zugeführt, deren Ausgangssignale ein Betätigungssystem 22 beeinflussen, das dem Glied 15 zugeordnet ist.

Das Betätigungssystem 22 wird durch einen Elektromotor 23 und eine Exzenterscheibe 24 gebildet, die über einen Endlostrieb 25 miteinander verbunden sind. Anstelle des Elektromotors 23 könnte auch ein Elektromagnet verwendet werden.

Der Grad der Dämpfung des Hydrauliksystems, der ja in Abhängigkeit der Fahrgeschwindigkeit bzw. der Radbeschleunigung — in senkrechter Richtung — eingestellt wird, hängt von folgenden Annahmen ab :

1. progressiver, linearer oder degressiver Verlauf zwischen Dämpfungseinstellung und Fahrgeschwindigkeit bzw. Radbeschleunigung.

2. Gewichtung der Fahrgeschwindigkeit und der Radbeschleunigung nach der Formel :

$$S_E = \beta_F \times S_F + \beta_B \times S_B$$

Darin ist :
$S_F$ = Signal für Fahrgeschwindigkeit
$S_B$ = Signal für effektive Radbeschleunigung
$\beta_F$ = Gewichtungsfaktor Fahrgeschwindigkeit
$\beta_B$ = Gewichtungsfaktor Radbeschleunigung
Der Verlauf zwischen Dämpfereinstellung und Fahrgeschwindigkeit bzw. Radbeschleunigung wird durch Versuche bestimmt. Bei den Gewichtungsfaktoren $\beta_F$ und $\beta_B$ wird gleichermaßen verfahren.

## Ansprüche

1. Hydropneumatisch abgefederter Sitz (3) für Fahrzeuge, der sich an einem hydraulischen Verdrängerelement (9) abstützt, wobei das Verdrängerelement unter Zwischenschaltung einer Leitung (11) an ein einen Hydraulikraum (12) und einem Gasraum (13) aufweisendes Federungssystem (10) angeschlossen ist, wobei in der Leitung (11) ein Dämpfungsglied (15) angeordnet ist, dadurch gekennzeichnet, daß das Dämpfungsglied (15) in Abhängigkeit von der Fahrgeschwindigkeit und von der Effektivbeschleunigung von ungefederten Fahrzeugmassen verstellt wird.

2. Hydropneumatisch abgefederter Sitz nach Anspruch 1, dadurch gekennzeichnet, daß zur Verstellung des Gliedes (15) Signale eines Tachometers (16) und eines vorzugsweise einem Radführungsglied (5) zugeordneten Beschleunigungsaufnehmers (17) dienen, wobei die Signale einer Rechnereinheit (18) zugeführt werden, deren Ausgangssignale ein dem Glied (15) zugeordnetes Betätigungssystem (22) beeinflussen.

3. Hydropneumatisch abgefederter Sitz nach Anspruch 2, dadurch gekennzeichnet, daß das Betätigungssystem (22) durch einen Elektromotor (23) und eine Exzenterscheibe (24) gebildet wird, die auf das den Querschnitt der Leitung (11) verändernde Glied (15) einwirkt.

## Claims

1. A hydropneumatically spring-mounted seat (3) for vehicles, which is supported by a hydraulic displacement element (9) connected to a spring system (1) comprising a hydraulic chamber (12) and a gas chamber (13), with the interposition of a line (11), a damping member (15) being arranged in the line (11), characterised in that the damping member (15) is adjusted as a function of the speed of travel and the effective acceleration of unsprung vehicle masses.

2. A hydropneumatically spring-mounted seat according to claim 1, characterised in that signals of a tachometer (16) and of an acceleration pickup (17), preferably associated with a wheel guide member (5), are used to adjust the member (15) and are fed to a computer unit (18) whose output signals influence an actuating system (22) associated with the member (15).

3. A hydropneumatically spring-mounted seat according to claim 2, characterised in that the actuating system (22) is formed by an electromotor (23) and an accentric disc (24) which acts on the member (15) altering the cross-section of the line (11).

## Revendications

1. Siège (3) à suspension hydropneumatique pour véhicules, qui s'appuie sur un élément de déplacement hydraulique (9), l'organe d'amortissement étant raccordé à un système de suspension élastique (10) comprenant une enceinte hydraulique (12) et une enceinte à gaz (13) avec interposition d'une conduite (11), un organe d'amortissement (15 étant disposé dans la conduite (11), caractérisé en ce que l'organe d'amortissement (15) est réglé en fonction de la vitesse du véhicule et de l'accélération effective de masses non suspendues du véhicule.

2. Siège à suspension hydropneumatique selon la revendication 1, caractérisé en ce que pour régler l'organe (15), on utilise les signaux d'un tachimètre (16) et d'un capteur d'accélération (17) associé de préférence à un organe de guidage de roue (5), les signaux de sortie ont une influence sur le système de manœuvre (22) associé à l'organe (15).

3. Siège à suspension hydropneumatique selon la revendication 2, caractérisé en ce que le système de manœuvre (22) est constitué par un moteur électrique (23) et par un disque excentrique (24) agissant sur l'organe (15) qui modifie la section transversale de la conduite (11).